# EUROPÄISCHE PATENTSCHRIFT

(11) **EP 1 213 401 B1**
(45) Veröffentlichungstag und Bekanntmachung des Hinweises auf die Patenterteilung: **07.09.2005**
(21) Anmeldenummer: 01128871.9
(22) Anmeldetag: 05.12.2001
(51) Int. Cl.: E04C 2/288

(54) **Rundwandeinrichtung**
Curved wall
Paroi courbe

(30) Priorität: 06.12.2000 DE 10060869
(43) Veröffentlichungstag der Anmeldung: 12.06.2002
(73) Patentinhaber: Wedi, Stephan, 48283 Emsdetten (DE)
(72) Erfinder: Wedi, Stephan, 48283 Emsdetten (DE)
(74) Vertreter: Hoffmeister, Helmut

(56) Entgegenhaltungen:
- EP-A- 0 466 163
- EP-A- 0 495 238
- EP-A- 0 595 287
- DE-A- 3 901 237
- DE-C- 4 234 269
- US-A- 3 535 198

## Beschreibung

Die Erfindung betrifft ein Verfahren zur Herstellung gekrümmter Wandbogensegmente gemäß dem Oberbegriff des Patentanspruchs 1.

Eine Rundwandeinrichtung ist aus der DE-C-4 100 737 bekannt. Sie besteht aus 3 - 8 Bogenelementen, die durch an den Seiten jeweils passende Nut- und Federelemente zu einer zylindrischen Röhre zusammengefügt werden. Diese Röhre wird mit einem Bodenelement mit kreisförmiger Nut und zur Mitte verlaufendem Gefälle und einem Deckelelement zu einer Runddusche zusammengefügt. In der Mitte des Bodenelements ist eine Bodenöffnung vorgesehen. Die Bogenelemente und das Boden- und Deckelelemnet werden aus einem Kunststoffhartschaum durch Schäumen oder Zuschneiden hergestellt Zur Oberflächenvestärkung wird auf das Bodenelement und die Innen- und Außenseite der Röhre eine Schicht aus glasfaserverstärktem Beton aufgebracht.

Nachteilig ist, daß die Kunststoffhartschaumteile unbeschichtet zur Baustelle transportiert und dort zusammengebaut werden. Der weiche Kunststoffhartschaum ist zwar leicht, aber bruchempfindlich und nicht belastbar, so daß die Einzelteile unbrauchbar werden können. Ein weiterer Nachteil ist der, daß nach dem Herausschneiden einer Zugangsöffnung erst mit der Innenbeschichtung begonnen wird. Außerdem erschwert die enge Röhre die Beschichtungsarbeiten. Muß mit dem weichen Röhrenmaterial im Bereich der Zugangsöffnung eine Kabinentür verbunden werden, finden die Verbindungselemente keinen Halt

Eine Wandeinrichtung, die aus Bauplatten aufgebaut ist, ist aus der DE-Firmenschrift: wediwelt, Ausgabe 09, Juni 2000, S. 5 abgebildet. Ebene Bauplatten sind aus der sind aus der DE-C-4 234 269 bekannt. Sie bestehen aus einem Schaumstoffkern, der beidseitig mit einer armierten Mörtelschicht beschichtet ist.

Durch ein einseitiges Einschneiden dieser Bauplatten lassen sich, wie aus dem DE-Prospekt: Die Wedi-Bauplatte, 2/96, S. 7, bekannt ist, Rundungen herstellen. Die keilförmigen Einschnitte in die Bauplatte werden mit Fliesenmörtel verschlossen, damit die gewünschte Rundung bestehenbleibt.

Nachteilig ist, daß durch die keilförmigen Einschnitte eine der beiden armierten Mörtelschichten und der Schaumstoffkern verletzt werden. Hierdurch wird nicht nur die Festigkeit, sondern auch die Flüssigkeitsdichtheit der Platte beeinträchtigt.

Aus der DE-A-1 629 454 ist ein Verfahren zur Herstellung von Bauplatten bekannt. Hierbei wird auf Platten als Strang aus Schaumstoff einseitig oder auf beiden Seiten mit einer Beschichtung beschichtet. Durch die Kaschierung auf nur einer Seite der Schaumstoffplatte oder einer Kaschierung mit ungleichen Materialien auf beiden Seiten kann es zu Formänderungen, insbesondere Krümmungen der Platte kommen. Diese Verformungen werden als nachteilig angesehen. Um die nachteiligen Formänderungen zu vermeiden, wird eine zum Ausgleich der unterschiedlichen Schwindspannungen dienende Gewebebahn in den sich als Strang bildenden Schaumkörper einlaufen gelassen.

Aus der EP-B-0 466 163 ist ein Bauprofil bekannt, das aus wenigstens zwei Platten aus Kunststoff-Hartschaum besteht, die mit einer dazwischenliegenden Schicht aus einem Armierungsgewebe und einem aushartbaren Kunststoffmörtel bestehen. Auf den freien Außenseiten der Platten ist ebenfalls eine armierte Mörtelschicht angeordnet.

Aus der US-A-3535198 ist eine Bauplatte bekannt, die aus zwei Polyurethan-Halblaminaten die miteinder geklebt werden. Die so zusammengebaute Bauplatte wird anschließend gebogen.

Allerdings werden die Platten nur miteinander verklebt, um die Plattenbreite, die Querstabilität und die Verwindungssteifigkeit zu erhöhen.

Es stellt sich deshalb die Aufgabe, eine Rundwandeinrichtung so weiter zu entwickeln, daß deren Festigkeit bei bleibender Flüssigkeitsdichtigkeit erhöht wird und der Materialaufwand bei der Herstellung nicht größer als der für beschichtete Bauplatten ist.

Erfindungsgemaß wird diese Aufgabe durch das Verfahren des Patentanspruchs 1 gelöst.

Überraschenderweise wurde gefunden, daß einseitig mit einer armierten Mörtelschicht beschichtete Plattenschaumstoffkerne ähnlich wie Holzbretter im Schiffbau sich biegen lassen. Die Biegung kann sowohl konkav als auch konvex vorgenommen werden. Der wenigstens teilweise elastische Kunststoff-Hartschaum nimmt dabei die Dehnungen und die Stauchungen auf. Die armierte Mörtelschicht folgt der konkaven bzw. konvexen Rundung, ohne zu brechen. Der Biegeradius beträgt bei einer einseitig beschichteten Bauplatte von 600 mm Breite und einer Länge von 1250 bzw. 2500 mm etwa 250 mm (0,25 m). Auch darunterliegende Biegeradien sind möglich, wenn beim Kunststoffmörtel der Kunststoffanteil und damit die Biegemöglichkeit erhöht wird. Der Biegeradius beträgt, wie durch Versuche ermittelt, vorzugsweise 500 mm Die Dicke des Plattenschaumstoffkerns kann zwischen 5 und 50 mm schwanken. Der Einsatz einseitig beschichteter Bauplatten bringt eine hohe Kostenersparnis. Zum einen braucht der Schaumstoffkern der Bogenteilwand nicht unter hohem Fertigungsaufwand aus einem Block herausgeschnitten und anschließend von Hand mit zwei sich gegenüberliegenden Mörtelschichten beschichtet werden. Vielmehr kann die bereits laufende Anlage zum Herstellen der Bauplatten verwendet werden, so daß sich die notwendigen Investitionskosten für die Fertigungsanlagen wesentlich minimieren.

Um das Beschichten der unbeschichteten Flachseite des Bogenplatten-Schaumstoffkerns von Hand zu vermeiden, können die einseitig beschichteten Bauplatten konvex bzw. konkav gebogen werden und danach an ihren unbeschichteten Flachseiten miteinander verbunden werden. Hierdurch entsteht ein Wandbogensegment, das äußerlich wie ein einteilig hergestelltes Wandbogensegment aussieht. Das Verbinden an den beiden unbeschichteten Flachseiten kann mit Hilfe eines Kleberflächenelements erfolgen, das wie eine Versteifungswand das Wandbogensegment durchzieht.

Die Wandbogensegmente können an ihren Schmalseiten untereinander zu der Rundwandeinrichtung verbunden werden.

Das wird dadurch erleichtert, daß die erste und die zweite armierte Mörtelschicht wenigstens teilweise als Mörtelschicht-Überstandsflächenelement über dem Schaumstoffkern übersteht.
Es kann auch dadurch erleichtert werden, wenn wenigstens die erste Bogenmörtelschicht eines der Wandbogensegmente an einer Schmalseite auf dem ersten Bogenplatten-Schaumstoffkern beabstandet angeordnet wird und wenn eines der armierten Mörtelschicht- Überstandsflächenelemente auf dem Kernstreifen aufgeklebt wird.

Beim Verbinden der Wandbogensegmente kann zwischen den sich gegenüberliegenden Schmalseiten der Wandbogensegmente ein Verbindungsschaumstoffkern eingesetzt werden. Auf dem Verbindungsschaumstoffkern können die überstehenden Mörtelschicht-Überstandsflächenelemente aufgeklebt und so die Verbindung der einzelnen Wandbogensegmente zu einer Bogenwandeinrichtung erhöht werden.

Die aneinanderstoßenden Mörtelschicht-Überstandsflächenelemente konnen mit einem Verbindungsdichtungsband überklebt werden. Hierdurch wird sowohl die Festigkeit als auch die Flüssigkeitsdichtigkeit gewährleistet.

Derartig hergestellte Rundwandeinrichtungen können für die immer beliebter werdenden Runddusche, für repräsentative Eingänge, Verkaufsräume, Ausstellungsräume oder dergleichen eingesetzt werden. Dadurch, daß einseitig beschichtete Bauplatten zum Einsatz kommen, die lediglich nur noch gebogen und miteinander verklebt werden müssen, lassen sich diese Rundwandeinrichtungen sehr günstig und damit in hoher Stückzahl herstellen.

Die gestellte Aufgabe läßt sich durch ein Verfahren zum Herstellen eines gebogenen Wandelements (Wandbogenelement) nach folgenden Verfahrensschritten lösen,
- eine erste Schaumstoffplatte (Plattenschaumstoffkern) mit einer auf einer Flachseite aufgebrachten ersten armierten Mörtelschicht wird konkav zu einem ersten Bogenteilelement gebogen,
- eine zweite Schaumstoffplatte mit einer auf einer Flachseite aufgebrachten zweiten armierten Mörtelschicht wird konvex zu einem zweiten Bogenteilelement (Bogenteilelemnt) gebogen und
- das erste Bogenteilelement und das zweite Bogenteilelement werden mit ihren jeweils unbeschichteten Flachseiten verbunden.
Die hiermit erzielten Vorteile bestehen auch hier darin, daß zum einen der Schaumstoffkern der Bogenteilwand nicht unter hohem Fertigungsaufwand aus einem Block herausgeschnitten werden braucht und anschließend von Hand mit zwei sich gegenüberliegenden Mörtelschichten beschichtet werden. Vielmehr kann auch hier die bereits laufende Anlage zum Herstellen der Bauplatten verwendet werden, so daß sich die notwendigen Investitionskosten für die Fertigungsanlagen wesentlich minimieren.

Die armierten Mörtelschichten können auch hier, wie bereits ausgeführt mit den gleichen Vorteilen über die Schaumstoffplatten überstehen.

Die hiermit erzielten Vorteile bestehen insbesondere darin, daß die Bogenplatten-Schaumstoffkerne mit armierten Bogenmörtelschichten ebenso beschichtet sind, wie die glatten und ebenen Bauplatten. Hierdurch ist es möglich, sie als Trennwände für Einsatzfälle jeglicher Art einzusetzen.

Eine Bogenteilwand kann aus einem ersten mit einer ersten Bogenmörtelschicht beschichteten Bogenplatten-Schaumstoffkern und einem zweiten mit einer zweiten Bogenmörtelschicht beschichteten Bogenplatten-Schaumstoffkern bestehen. Beide Kernen können an ihren unbeschichteten Schaumstoff-Bogenflächenelementen miteinander verbunden werden. Hierdurch ist ein einfaches und kostengünstiges Herstellen der Bogenteilwände möglich.

Die erste und die zweite Bogenmörtelschicht können auf wenigstens einer der Schmalseiten wenigstens teilweise mit einem armierten Mörtelschicht-Überstandsflächenelement überstehen. Diese Mörtelschicht-Überstandsflächenelemente vereinfachen eine festigkeits- und flüssigkeitssichere Verbindung der einzelnen Wandbogensegmente.

Die Verbindung kann durch einen Verbindungsschaumstoffkern erleichtert werden, der zwischen den beiden Schmalseiten und den Innenseiten der Mörtelschicht-Überstandsflächenelemente angeordnet sein kann. Durch die innige Verbindung des Verbindungsschaumstoffkerns mit den wesentlichen Teilen der Wandbogensegmente wird ein einteilige Ausbildung einer Rundwandeinrichtung beliebiger Länge gewährleistet.

Die erste Bogenmörtelschicht eines der Wandbogensegmente kann für eine Verbindung an einer Schmalseite) auf dem ersten Bogenplatten-Schaumstoffkern beabstandet angeordnet sein. Eines der armierten Mörtelschicht- Überstandsflächenelemente kann dann auf dem Kernstreifen aufgeklebt werden

Die armierten Bogenmörtelschichten und die armierten Mörtelschicht-Überstandsflächenelemente können aus einem Glasfasergewebe bestehen, das wenigstens teilweise in einer aushärtbaren Mörtelschicht eingebettet ist. Die Einbettung des Glasfasergewebes in die Mörtelschicht gewährleistet die wandähnlichen Eigenschaften des an sich weichen Schaumstoffkerns.

Das Glasfasergewebe kann eine Maschenweite aufweisen, die zwischen 0,25 bis 0,6 x 0,25 bis 0,6 cm und zwischen 0,4 bis 0,7 x 0,9 bis 1,1 cm schwanken kann. Langjährige Praxis-Tests haben ergeben, daß der Einsatz von Glasfasergeweben mit einer Maschenweite von 0,6 x 1,0 cm die höchsten Steifigkeitseigenschaften gewährleistet. Die gewählte Maschenweite gewährleistet einen optimalen Mörteleinsatz. Wird die Maschenweite erhöht, muß zur Erreichung gleicher Festigkeitseigenschaften die Fadendicke vergrößert werden. Die Vergrößerung der Fadendicke ist aber mit einer wesentlichen Vergrößerung der Mörtelmenge zur Ausbildung der armierten Mörtelschicht verbunden. Die zweite Maschenweite, die sich in Praxis-Tests bewährt hat, ist eine von 0,5 x 0,5 mm. Die Verkleinerung der Maschenweite führt zu einer sehr wirksamen Erhöhung der Festigkeit. Dadurch, daß die Fäden für die Herstellung des Gewebes dünner gewählt werden können, wird weniger Mörtel verbraucht. Werden sehr hohe Steifigkeitswerte verlangt, können Fäden mit der gleichen Dicken wie bei dem Gewebe mit der Maschenweite 0,6 x 1,0 cm zum Einsatz kommen. Der Mörtelverbrauch ist bei diesen Geweben geringfügig höher als bei Geweben mit der Maschenweite 0,6 x 1,0 cm.

Für die Herstellung der Mörtelschicht wird ein kunststoffvergüteter Zementmörtel eingesetzt. Durch die Veränderung der Zement- bzw. Kunststoffanteile können die Elastizität und die Wasserdichtigkeit der Mörtelschicht beeinflußt werden.

Letzendlich ist es auch möglich, die gestellte Aufgabe durch ein Verfahren zur Herstellung von mindestens zwei gebogenen Wandelementen (Wandbogensegmente) derart zu lösen, daß die Wandelemente (Wandbogensegmente) mit ihren Schmalseiten über einen Verbindungsschaumstoffkern verbunden sind, der zwischen den überstehenden Mörtelschichten eingeklebt ist und auf die überstehenden Mörtelschichten benachbarter Elemente (Wandbogensegmente) zur Fugenüberdekkung ein Verbindungsdichtband aufgeklebt ist.

Hiermit sind die bereits ausführlich beschriebenen Vorteile verbunden.

Ein Ausführungsbeispiel der Erfindung ist in der Zeichnung dargestellt und in der nachfolgenden Beschreibung erläutert. Es zeigen:
- Fig. 1: eine Runddusche mit einer Rundwandeinrichtung in einer schematischen,perspektivischen Darstellung;
- Fig. 2: eine Runddusche gemäß Fig. 1 in einer auseinandergezogenen Darstellung;
- Fig. 3: eine Duschtasseneinrichtung für eine Runddusche gemäß Fig. 1 in einer perspektivischen Schnittdarstellung;
- Fig. 4: eine in eine Duschtasseneinrichtung eingesetzte Rundwandeinrichtung in einer schematisch dargestellten Teilschnitt-Darstellung;
- Fig. 5: eine Rundwandeinrichtung gemäß den Fig. 1, 2 und 4 in einer schematischen, perspektivischen Darstellung;
- Fig. 6: ein Wandbogensegment für eine Rundwandeinrichtung gemäß Fig. 5 in einer teilweise auseinandergezogenen schematischen, perspektivischen Darstellung;
- Fig. 7: ein Wandbogensegment gemäß Fig. 6 in einer zusammegesetzten schematischen, perspektivischen Darstellung und
- Fig. 8: zwei einseitig mit einer armierten Mörtelschicht beschichtete Plattenschaumstoffkerne für eine Herstellung eines Wandbogensegments gemäß Fig. 6 und 7 in einer schematischen, auseinandergezogenen perspektivischen Darstellung.

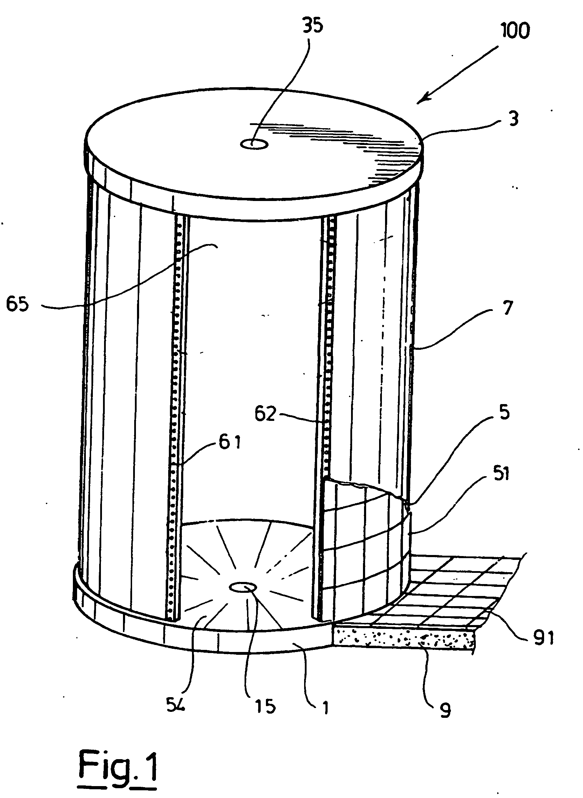

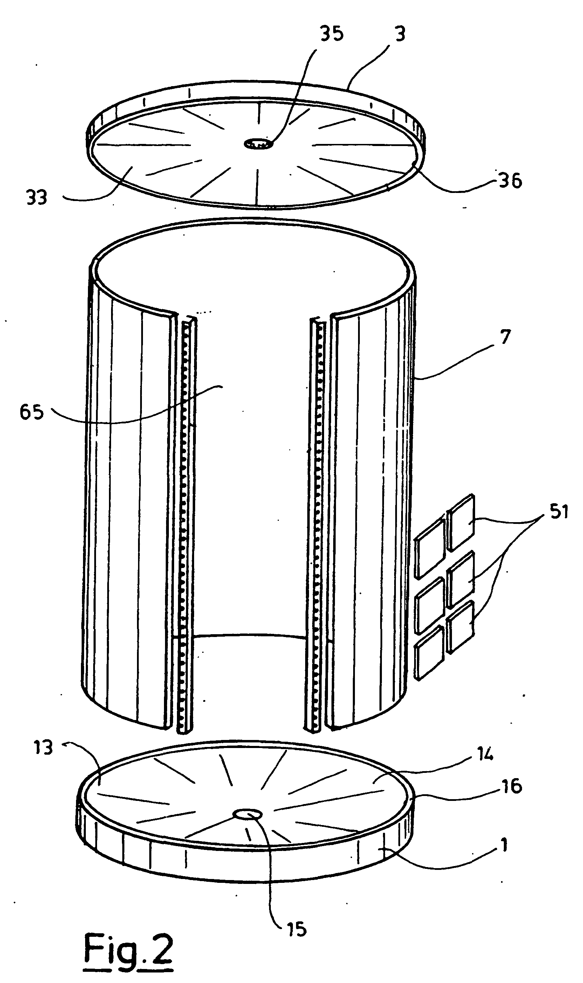

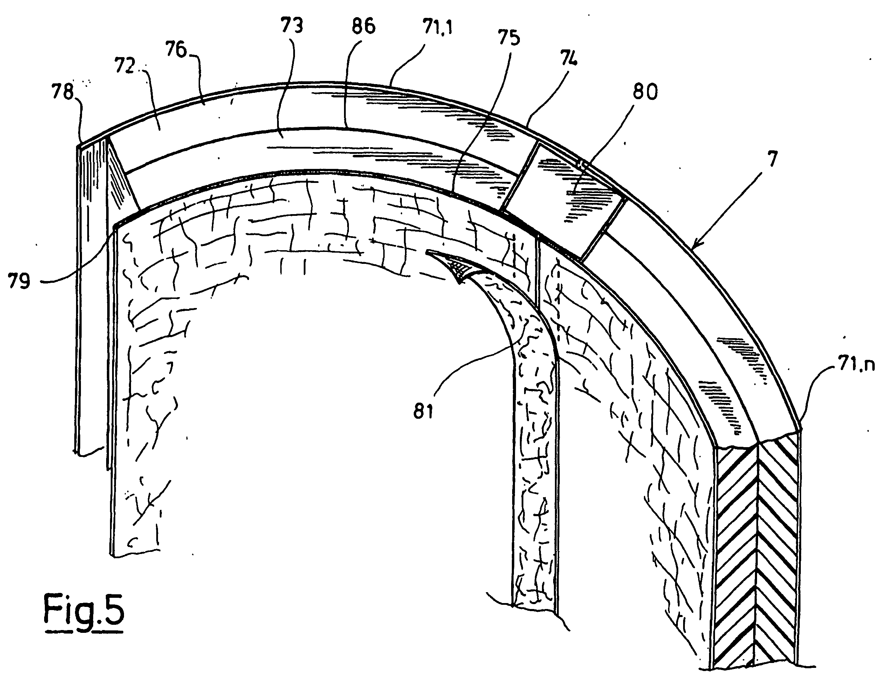

In den Figuren 5, 6 und 7 sind die einzelnen Elemente einer Rundwandeinrichtung gezeigt.
Sie kann für Trennwände oder Eingangsbereiche in repräsentativen Gebäuden eingesetzt werden.
Die Rundwandeinrichtung ist hier als Dusch-Rundwandeinrichtung 7 Teil einer Runddusche 100, wie sie in den Figuren 1 und 2 dargestellt ist.

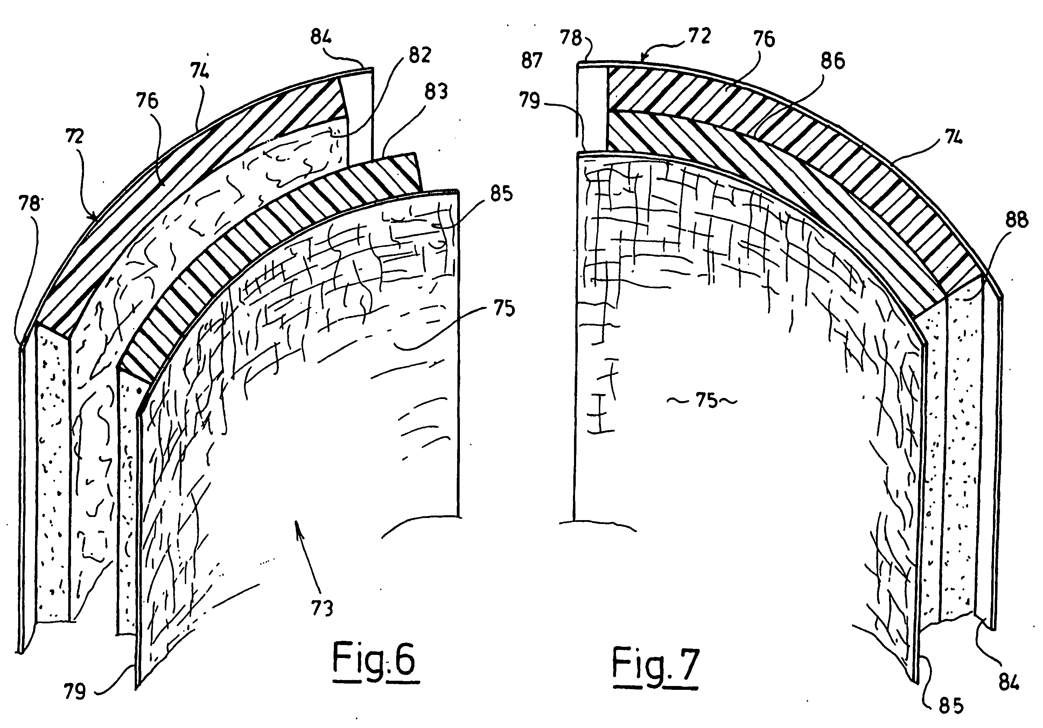

Wie Figur 5 zeigt, wird die Dusch-Rundwandeinrichtung 7 aus mehreren Wandbogensegmenten 71.1,... 71.n zusammengesetzt. In Figur 6 ist ein Wandbogensegment 71.1, ... vor der Fertigstellung gezeigt.
Es besteht aus zwei Bogenteilwänden 72, 73 aus einem Kunststoff-Hartschaum, die einseitig mit einer armierten Bogenmörtelschicht 74, 75 beschichtet sind. Die armierte Bogenmörtelschicht 74 ragt zu einer Seite als ein Mörtelschicht-Überstandsflächenelement 78 und auf der gegenüberliegenden Seite als ein Mörtelschicht-Überstandsflächenelement 84 Über. In gleicher Weise ragt die armierte Bogenmörtelschicht 75 auf der einen Seite als Mörtelschicht- Überstandsflächenelement 79 und auf der anderen Seite als ein Mörtelschicht-Überstandsflächenelement 85 über.
Es kann aber auch wenigstens eine Bogenmörtelschicht eines der Wandbogensegmente 71.1, ..., 71.n an einer Schmalseite 87, 88 auf einem Bogenplatten-Schaumstoffkern beabstandet angeordnet werden und eines der armierten Mörtelschicht-Überstandsflächenelemente auf den freien Kernstreifen aufgeklebt werden.

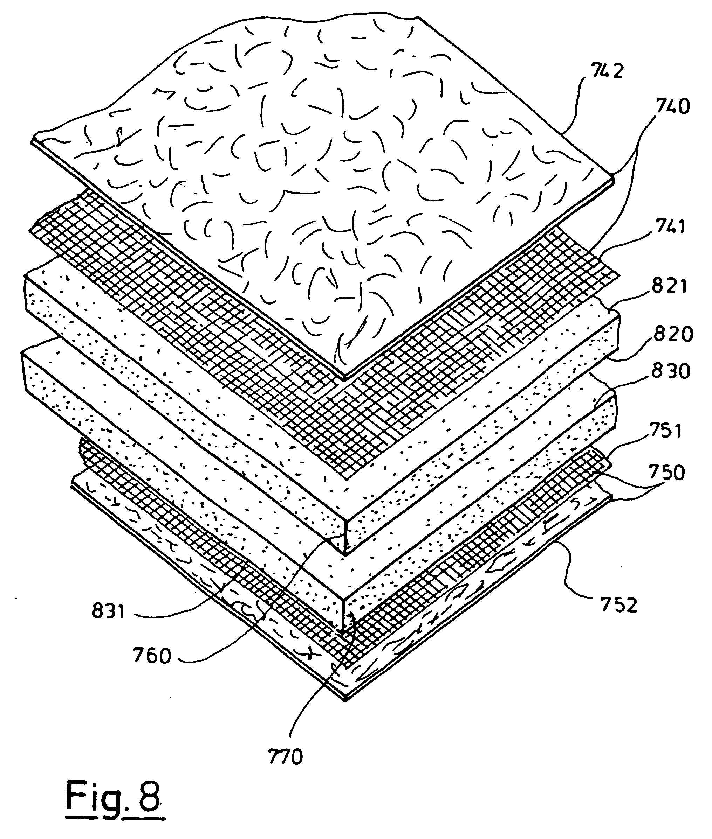

Überraschenderweise wurde gefunden, daß gerade und ebene Plattenschaumstoffkerne 760, 770, wie in Figur 8 gezeigt, die einseitig mit einer armierten Mörtelschicht 740, 750 beschichtet sind, bei einer Plattenbreite von 600 mm und einer Plattenlänge von 1250 bzw. 2500 mm sich zu den Bogenteilwänden 72, 73 biegen lassen. Der elastische Plattenschaumstoffkern 760, 770 und die relativ biegefreudige armierte Mörtelschicht lassen sich in einem Radius bis zu 250 mm (=0,25 m) biegen, ohne daß die armierte Mörtelschicht bricht. Durch Versuche wurde ein Biegeradius von etwa 500 mm als fertigungstechnisch realisierbar ermittelt. Bei dem Biegevorgang nimmt der Plattenschaumstoffkern 760, 770 die Stauchungen bzw. Dehnungen auf. Die auftretenden Spannungen (Rückstellkräfte) beim Biegen des Plattenschaumstoffkerns werden durch spannungsreduzierende Maßnahmen, wie kurzzeitige Schocktemperaturbehandlung, Einritzen des Schaumstoffkerns oder Langzeitemperaturbehandlungen abgebaut. In der Regel wird Wärme angewendet. Es kann aber Kälte zur Anwendung kommen.

Diese Art der Umformung von einseitig mit einer armierten Mörtelschicht beschichteten Plattenschaumstoffkernen hat folgende Vorteile:
1. Bei dem Biegevorgang werden sowohl die Plattenschaumstoffkerne als auch die armierten Mörtelschichten nicht verletzt. Damit ist gewährleistet, daß derartige Bogenteilwände 72, 73 flüssigkeitsbelastbar sind, ohne Undichtigkeiten zu zeigen und eine erhöhte Stabilität aufweisen.
2. Die Herstellung der mit der armierten Mörtelschicht beschichteten Plattenschaumstoffkerne kann maschinell und damit kostengünstig vorgenommen werden.

Der besondere Vorteil besteht darin, daß die ebenen Plattenschaumstoffkerne 760, 770 nach dem Verfahren gemäß der DE 42 34 269 C1 beschichtet werden, so daß auf die bereits bestehende Beschichtungsanlage ohne zusätzliche Investitionskosten zurückgegriffen werden kann. Bei dem Beschichten werden die Plattenschaumstoffkerne 760, 770 gemäß Fig. 8 auf eine Fördereinrichtung gelegt. Danach wird spannungsfrei von einer Rolle Glasfasergewebebahn abgezogen und in einer auf die Plattenschaumstoffkerne aufgebrachte und verteilte Mörtelschicht 742, 752 eingedrückt. Beim Weitertransport wird die in die flüssige Mörtelschicht eingebrachte Glasfasergewebebahn in Glasfasergewebe 741, 751 geschnitten. Die auf den Plattenschaumstoffkernen 760, 770 aufgebrauchte flüssige Mörtelschicht mit dem eingebetteten Glasfasergewebe wird in einem Trockenofen getrocknet und einer weiteren Verarbeitung zugeführt.

Die so mit der armierten Mörtelschicht 740, 750 versehenen Plattenschaumstoffkerne 760, 770 werden konkav bzw. konvex zu den beiden Bogenteilwänden 72, 73 gebogen. Danach werden die beiden Bogenteilwände 72, 73 an ihrem unbeschichteten Schaumstoff-Bogenflächenelement 82, 83 mit einem Kleberflächenelement 86 versehen und zu einem Wandbogensegment 71.1, .. verklebt. Durch das Zusammenkleben zwei einseitig beschichteter und gebogener Bogenteilwände wird ein aufwendiges Beschichten der freien Schaumstoff-Bogenflächenelemente 82, 83 von Hand vermieden, wie es aus der DE 32 23 006 C2 und der DE 41 00 737 C1 bekannt ist.
Beim Beschichten werden zugleich die bereits beschriebenen Mörtelschicht-Überstandsflächenelemente 78, 79, 84, 85 mit ausgebildet.

Figur 5 zeigt, wie die einzelnen Wandbogensegmente 71.1, ... zu einer Rundwandeinrichtung 7 zusammengesetzt werden. Hierzu wird ein Verbindungsschaumstoffkern 80 auf die mit 87, 88 bezeichneten Schmalseiten der Wandbogensegmente geklebt. Weil der Verbindungsschaumstoffkern 80 relativ schmal ist, braucht er nicht mit einer inneren bzw. äußeren Rundung versehen werden. Bei dem Ankleben des Verbindungsschaumstoffkerns 80 wird zugleich eine Verklebung mit den Mörtelschicht-Überstandsflächenelementen 78, 79, 84, 85 vorgenommen.

Wie in Figur 5 gezeigt, wird über den sich dadurch ausbildenden Stoß ein Verbindungsdichtungsband 81 geklebt. Als Kleber kann für sämtliche Klebarbeiten der Mörtel verwendet werden, der für die Ausbildung der Mörtelschichten 742, 752 zum Einsatz kommt. Durch ein unterschiedliches Mischungsverhältnis zwischen Kunststoff- und Mörtelanteil können die Klebereigenschaften sowie die Elastizität der einzelnen Mörtelschichten variiert und beeinflußt werden.

Die Duschtassen-Boden-, die Duschtassen-Decken- und die Duschtassen-Rundwandeinrichtung 7 sind durch eine Duschverkleidung 5 verkleidet. Angeglichen an die Duschverkleidung 5 kann ein Bad-Fußboden 9 und eine Wandverkleidung (nicht dargestellt) ausgebildet werden.

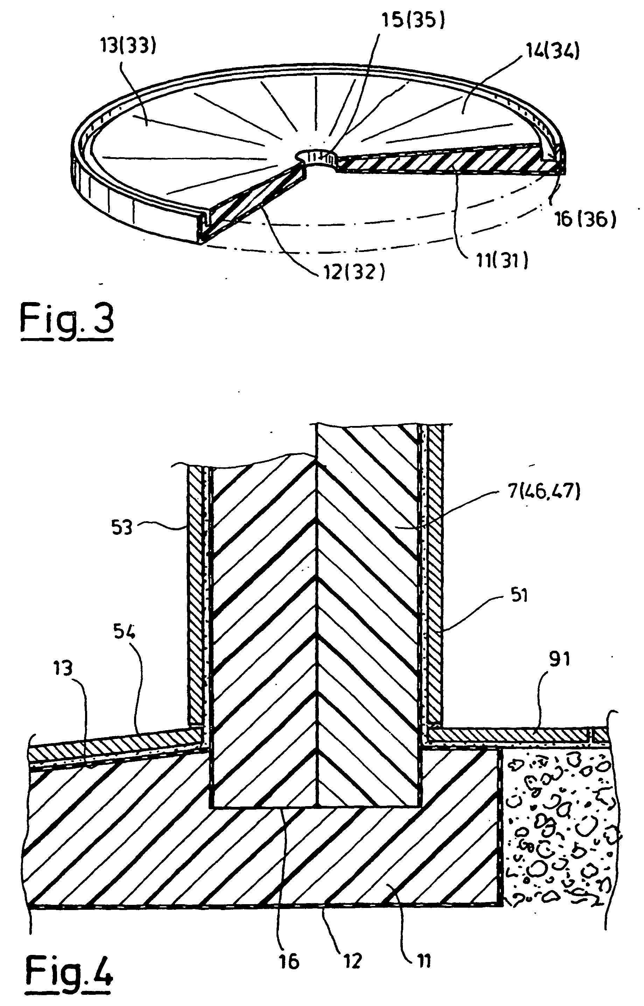

Wie in Figur 2 gezeigt, weist die Duschtassen-Bodeneinrichtung 1 und die Duschtassen-Deckeneinrichtung 3 den gleichen Aufbau auf. Sie sind im Detail in Fig. 3 dargestellt.

Sowohl die Duschtassen-Bodeneinrichtung 1 als auch die Duschtassen-Deckeneinrichtung 3 bestehen aus einem Tassenschaumstoffkern 11, 31 aus Kunststoff-Hartschaum oder einem anderen organischen oder anorganischen Stoff.

Bei der Herstellung des Schaumstoffkerns wird von einem Schaumstoffblock zuerst eine Scheibe entsprechender Dicke abgeschnitten. Anschließend wird die äußere Konfiguration des Schaumstoffkerns zugeschnitten. Bei dem in Figur 3 dargestellten Tassenschaumstoffkern 11, 31 weist dieser eine runde Konfiguration auf. Beim kreisförmigen Zuschneiden kann zugleich eine umlaufende Ringausnehmung 16, 36 in den Schaumstoffkern mit eingeschnitten werden. Ebenfalls im gleichen Arbeitsschritt oder darauffolgend wird eine Trichterausnehmung 14, 34 eingeschnitten. Von besonderem Vorteil ist, daß die Trichterausnehmung so ausgebildet wird, daß sie das entsprechende Gefälle zu einer einzubringenden Ablauf bzw. Abzugausnehmung 15, 35 gewährleistet. Ist die Trichterausnehmung eingeschnitten, wird diese anschließend mit einer armierten Trichtermörtelschicht 13, 33 beschichtet. Die der Trichterausnehmung gegenüberliegende gerade Fläche des Tassenschaumstoffkerns wird mit einer armierten Mörtelschicht 12, 32 versehen.

Im Prinzip sind sowohl Duschtassen-Bodeneinrichtung als auch Duschtassen-Deckeneinrichtung im wesentlichen gleich ausgebildet. Fertigungstechnisch hat das den großen Vorteil, daß in Serie gleich ausgebildete Tasseneinrichtungen gefertigt werden können, die dann entsprechend zum Einsatz kommen können.

Wird beim Aufbau der Runddusche 100 die Abzugausnehmung 35 nicht gewünscht, kann diese entweder geschlossen oder die Duschtassen-Deckeneinrichtungen ohne diese Ausnehmung gefertigt werden.

Die Ringausnehmung 16 ist in den Tassenschaumstoffkern so tief und so breit eingebracht (vgl. auch Fig. 4), daß die Wand 7, 46, 47 sicher eingesetzt werden kann. Dadurch, daß der Tassenschaumstoffkern und auch der Schaumstoffkern der Wand 7, 46, 47 und die darauf angeordneten armierten Mörtelschichten unverletzt sind, bieten sich der Feuchtigkeit keine Möglichkeiten, um in den Unterbau zu gelangen, auf den die Runddusche 100 aufgesetzt ist.

Der Einbau der Runddusche unter Verwendung der beschriebenen Rundwandeinrichtung 7 in ein Badezimmer, wie es in den Figuren 1 und 2 gezeigt ist, wird wie folgt vorgenommen:

Auf dem Rohbeton des Badezimmers wird zuerst ein Unterbau aufgebracht und auf diesen die Duschtassen-Bodeneinrichtung 1 aufgesetzt. In die Ablaufausnehmung 15 wird ein Abflußtopfelement eingelegt, das mit einer Abflußleitung verbunden ist. Die Abflußleitung endet in einem Leitungsanschlußelement, das mit dem Topfanschlußelement des Abflußtopfelements verbunden ist. In das Topfanschlußelement wird in eine Dichtungsaufnahmenut eine Dichtung eingelegt, die eine wasserdichte Verbindung mit der Abflußleitung gewährleistet.

Anschließend wird die aus Wandbogensegmenten 71.1, ... zusammengesetzte Dusch-Rundwandeinrichtung 7 auf die Duschtasseneinrichtung so aufgesetzt, daß die zusammengesetzten Wandbogensegmente 71.1, ..., wie Figur 4 zeigt, paßgenau die Ringausnehmungen 16 ausfüllen. Dadurch, daß der Tassenschaumstoffkern 11 wenigstens teilweise elastisch ist, umfaßt er innig die eingesetzte Dusch-Rundwandeinrichtung 7. Unrundungen der Rundwandeinrichtung 7 werden hierbei ebenfalls mit ausgeglichen. Der Verbund zwischen der Rundwandeinrichtung 7 und dem armierten Tassenschaumstoffkern ist hierdurch so fest, daß bereits jetzt ein Duschen möglich wäre.

Wie insbesondere Figur 1 zeigt, werden auf die sich gegenüberliegenden Enden der Rundwandeinrichtung 7 im Bereich der Türausnehmung 65 jeweils ein gelochtes U-Profil 61, 62 aufgeklebt. Als Klebstoff wird auch hier der kunststoffvergütete Mörtel eingesetzt, der zum Ausbilden der armierten Mörtelschicht Verwendung findet. Der besondere Vorteil der Verwendung der gelochten U-Profile besteht darin, daß die Profile nicht nur festgeklebt werden, sondern daß der aus den Löchern des U-Profils austretende Kleber die U-Profile mit der Wandeinrichtung 7 verankert. Mit diesen U-Profilen kann dann eine Türzarge verbunden werden, die eine Tür oder einen Türflügel oder eine Schiebetür hält. Dadurch, daß das U-Profil sehr fest mit der Wandeinrichtung 7 verbunden ist, wird ein Ausreißen bzw. Abreißen der Türzarge im Gegensatz zu bereits bekannten bestehenden Duscheinrichtungen vermieden.

Auf die aufgestellte und eingesetzte Dusch-Rundwandeinrichtung 7 kann dann die Duschtassen-Deckeneinrichtung 3 aufgesetzt werden. Hierdurch erhält die Runddusche einen sehr wirksamen Abschluß. Dadurch, daß die Duschtassen Deckeneinrichtung ebenso wie die Duschtassen-Bodeneinrichtung die umlaufende Ringausnehmung 16 enthält, ist auch hier die sehr innige und wirksame Verbindung gewährleistet.

Sind die Einrichtungen 1, 7 und 3 aufgestellt bzw. installiert, wird die Duschverkleidung 5 und die Bodenverkleidung hergestellt. Als Duschverkleidung kommen an der Außenseite der Wandeinrichtung 7 Wandaußenkacheln 51 und im Inneren der Runddusche Wandinnenkacheln 53 zum Einsatz. Die Duschtassen-Deckeneinrichtung 3 kann ebenfalls mit den gleichen Kacheln verkachelt werden.

Anschließend wird mit Duschtassenkacheln 54 die Duschtassen-Bodeneinrichtung 3 belegt und in das Abflußtopfelement ein Topfeinbautenhalteelement mit einem Topfaußengewinde und einem Aufnahmestufenringelement so weit eingeschraubt, daß es entweder auf dem Unterboden-Element oder einer anderen Oberfläche aufsetzt und auf die Ablaufausnehmung 15 ein Ablaufgitter aufgelegt. Danach wird der Fußboden des Badezimmers als Bodenbelag mit Bodenkacheln 91 verkachelt. Passend hierzu werden Wandkacheln an den Wanden verlegt.

Wird die Runddusche benutzt, sichern die einteilige Duschtassen-Bodeneinrichtung 1, die einteilige Dusch-Rundwandeinrichtung 7, die einteilige Duschtassen-Deckeneinrichtung 3 und der Verbund zwischen der Dusch-Rundwandeinrichtung 7 und den beiden Tasseneinrichtungen, bedingt durch die Ringausnehmung 16 und 36, dafür, daß die Runddusche 100 allseitig flüssigkeitsdicht ist. Selbst geringsten Feuchtigkeitsmengen wird der Austritt nach außen verwehrt. Dadurch, daß die Einrichtungen 1, 3 und 7 vollständig aus beschichtetem Kunststoff-Hartschaum bestehen, führen sie zu keiner massiven Belastung der Decke, so daß sich die Runddusche 100 insbesondere für die Nachrüstung bereits bestehender Gebäude eignet. Ein weiterer Vorteil der einteilig ausgebildeten Einrichtungen 1, 3 und 7 ist der, daß sie aufgrund der Mörtelschichten Festigkeitseigenschaften wie aus Beton gegossene oder aus Steinen gemauerte Teile der Runddusche 100 aufweisen. Durch die Einfassung der Enden der Dusch-Rundwandeinrichtung 7 mit den wenigstens teilweise durchgehend ausgebildeten gelochten U-Profile 61, 62 werden sämtliche Türarten, die die Türausnehmung 65 verschließen können, sicher gehalten.

## Patentansprüche

1. Verfahren zur Herstellung gekrümmter Wandbogensegmente (71.1, 71.n), die aus zwei verbundenen, jeweils einen Schaumstoffkern (760, 770) aufweisenden Bogenteilwänden (72, 73) bestehen, **gekennzeichnet durch** folgende Verfahrensschritte:
a) eine erste Platte, bestehend aus einem Schaumstoffkern (760) mit auf einer Flachseite (821) aufgebrachten und mit einem Glasfasergewebe (741) armierten Mörtelschicht (740) wird konkav, d.h. mit außen auf dem Krümmungsbogen liegender Mörtelschicht, zu einer ersten Bogenteilwand (72) gebogen,
b) eine zweite Platte, bestehend aus einem Schaumstoffkern (770) mit auf einer Flachseite (831) aufgebrachten und mit einem Glasfasergewebe (751) armierten Mörtelschicht (750) wird konvex, d. h. mit innen auf dem Krümmungsbogen liegender Mörtelschicht, zu einer zweiten Bogenteilwand (73) gebogen,
c) die erste Bogenteilwand (72) und die zweite Bogenteilwand (73) werden mit ihren jeweils unbeschichteten Flachseiten (820,830) verbunden und bilden danach ein Wandbogensegment (71.1), das mit gleichen Wandbogensegmenten (71.n)an seinen Schmalseiten (87, 88) verbindbar ist.

2. Verfahren nach Anspruch 1, **dadurch gekennzeichnet, dass** die beim Biegen auftretenden Spannungen und Rückstellkräfte durch Temperaturbehandlung der Bogenteilwände (72, 73) abgebaut werden.

3. Verfahren nach Anspruch 1, **dadurch gekennzeichnet, dass** die Mörtelschicht (740, 750) auf dem ersten und dem zweiten Schaumstoffkern (760, 770) mit einem armierten Mörtelschicht-Überstandselement (78, 79, 84, 85) aufgebracht wird.

4. Verfahren nach Anspruch 3, **dadurch gekennzeichnet, dass** bei dem Verbinden der gebogenen Wandbogensegmente untereinander zwischen den sich gegenüberliegenden Schmalseiten (87, 88) zweier Wandbogensegmente (71.1, 71,n) ein Verbindungsschaumstoffkern (80) eingeklebt wird, auf den die armierten Mörtelschicht-Überstandselemente (78, 79, 84, 85) aufgeklebt werden.

5. Verfahren nach Anspruch 3, **dadurch gekennzeichnet, dass** über einen Stoß der Mörtelschicht-Überstandselemente (78, 79, 84, 85) ein Verbindungsdichtband(81) angeordnet wird.

6. Verfahren nach Anspruch 1 bis 4, **dadurch gekennzeichnet, dass** als Glasfasergewebe (741, 751) ein solches mit einer Maschenweite (in cm) zwischen 0,25 bis 0,6 x 0,25 bis 0,6 gewählt wird.

7. Verfahren nach Anspruch 1 bis 4, **dadurch gekennzeichnet, dass** das Glasfasergewebe (741, 751) ein solches mit einer Maschenweite (in cm) zwischen 0,4 bis 0,7 x 0,9 bis 1.1 gewählt wird.

8. Verfahren nach Anspruch 1 bis 6, **dadurch gekennzeichnet, dass** die Mörtelschicht (740, 750) aus einem kunststoffvergüteten Zementmörtel hergestellt wird.

## Claims

1. Method for producing curved wall segments (71.1, 71.n) comprising two connected curved wall parts (72, 73) having a foam core (760, 770), **characterised by** the following process steps:
a) a first board comprising a foam core (760) having a mortar coating (740) reinforced with a glass fibre web (74) applied to a flat side (821) is bent concavely, i.e. with the mortar coating lying outside on the bend, to form a first curved wall part (72),
b) a second board comprising a foam core (770) having a mortar coating (750) reinforced with a glass fibre web (751) applied to a flat side (831) is bent convexly, i.e. with the mortar coating lying inside on the bend, to form a second curved wall part (73),
c) the first curved wall part (72) and the second curved wall part (73) are connected with their uncoated flat sides and subsequently form a curved wall segment (71.1) which can be connected to identical curved wall segments (71.n) on its narrow sides (87, 88).

2. Method according to Claim 1, **characterised in that** the stresses and restoring forces occurring during bending are removed through temperature processing of the curved wall pars (72, 73).

3. Method according to Claim 1, **characterised in that** the mortar coating (740, 750) is applied to the first and the second foam core (760, 770) with a reinforced mortar coating projecting element (78, 79, 84, 85).

4. Method according to Claim 3, **characterised in that** when the curved wall segments are connected to each other a connecting foam core (80) is stuck between the opposing narrow sides (87, 88) of two curved wall segments (71.1, 71.n), to which connecting foam core (80) the reinforced mortar coating projecting elements (78, 79, 84, 85) are stuck.

5. Method according to Claim 3, **characterised in that** a connection sealing band (81) is arranged over a meeting of the mortar coating projecting elements (78, 79, 84, 85).

6. Method according to Claims 1 to 4, **characterised in that** a glass fibre web (741, 751) is selected which has a mesh size (in cm) between 0.25 to 0.6 x 0.25 to 0.6.

7. Method according to Claims 1 to 4, **characterised in that** a glass fibre web (741, 751) is selected with a mesh size (in cm) between 0.4 to 0.7 x 0.9 to 1.1.

8. Method according to Claims 1 to 6, **characterised in that** the mortar coating (740, 750) is produced from a plastic annealed cement mortar.

## Revendications

1. Procédé de fabrication de segments cintrés (71.1, 71.n) de parois courbes qui se composent de deux parois courbes partielles (72, 73) assemblées comportant chacune un noyau (760, 770) de matière expansée,
**caractérisé en ce qu'**il comprend les étapes consistant à:
a) courber de façon concave, pour former une première paroi courbe partielle (72), une première plaque constituée d'un noyau (760) de matière expansée qui est revêtu, sur un côté plat (821), d'une couche de mortier (740) armée d'un tissu (741) de fibres de verre, la couche de mortier étant donc située à l'extérieur sur l'arc cintré,
b) courber de façon convexe, pour former une deuxième paroi courbe partielle (73), une deuxième plaque constituée d'un noyau (770) de matière expansée qui est revêtu, sur un côté plat (831), d'une couche de mortier (750) armée d'un tissu (751) de fibres de verre, la couche de mortier étant donc située à l'intérieur sur l'arc cintré,
c) assembler la première paroi courbe partielle (72) et la deuxième paroi courbe partielle (73) par leurs côtés plats respectifs non revêtus (820, 830) et construire ensuite un segment (71.1) de paroi courbe qui peut être assemblé par ses petits côtés (87, 88) avec des segments pareils (71.n) de parois courbes.

2. Procédé selon la revendication 1, **caractérisé en ce que** les tensions et les forces de rappel engendrées lors de la courbure sont réduites par traitement thermique des parois courbes partielles (72, 73).

3. Procédé selon la revendication 1, **caractérisé en ce que** la couche de mortier (740, 750) est appliquée sur le premier et le deuxième noyaux (760, 770) de matière expansée en formant de plus un élément (78, 79, 84, 85) de couche de mortier armé en porte-à-faux.

4. Procédé selon la revendication 3, **caractérisé en ce qu'**un noyau d'assemblage (80) en matière expansée sur lequel sont collés les éléments armés de couche de mortier (78, 79, 84, 85) en porte-à-faux est inséré et collé entre les petits côtés opposés (87, 88) de deux segments (71.1, 71.n) de parois courbes, lors de l'assemblage des segments cintrés de parois courbes entre eux.

5. Procédé selon la revendication 3, **caractérisé en ce qu'**une bande d'étanchéité (81) d'assemblage est disposée au dessus d'une jointure des éléments en porte-à-faux de couche de mortier (78, 79 84, 85).

6. Procédé selon l'une quelconque des revendications 1 à 4, **caractérisé en ce que** la largeur de maille (en cm) du tissu de fibres de verre (741, 751) est sélectionnée entre 0,25 à 0,6 x 0,25 à 0,6.

7. Procédé selon l'une quelconque des revendications 1 à 4, **caractérisé en ce que** la largeur de maille (en cm) du tissu de fibres de verre (741, 751) est sélectionnée entre 0,4 à 0,7 x 0,9 à 1,1).

8. Procédé selon l'une quelconque des revendications 1 à 6, **caractérisé en ce que** la couche de mortier (740, 750) est fabriquée à partir d'un mortier de ciment incluant une matière plastique.
